# EUROPEAN PATENT SPECIFICATION

(11) **EP 0 578 694 B1**
(45) Date of publication and mention of the grant of the patent: **26.02.1997**
(21) Application number: 92907627.1
(22) Date of filing: 27.03.1992
(51) Int. Cl.: E04C 2/52, E04B 5/48

(54) **TEMPERATURE REGULATION OF VARIOUS BUILDING PARTS OF HOUSES**
TEMPERATURREGULIERUNG VERSCHIEDENER GEBÄUDETEILE DES HAUSES
REGULATION DE LA TEMPERATURE DE DIVERSES PARTIES D'UNE MAISON

(30) Priority: 04.04.1991 NO 911311
(43) Date of publication of application: 19.01.1994
(73) Proprietor: LEGABEAM NORGE AS, N-4344 Kvernaland (NO)
(72) Inventor: VOLSTAD, Ove, Charles, N-4344 Kvernaland (NO)
(74) Representative: Wagner, Karl Heinz
(86) International application number: NO9200052
(87) International publication number: WO9217664

(56) References cited:
- WO-A-91/07557
- DE-A- 1 609 802
- FR-A- 1 024 889
- NO-B- 137 218
- NO-B- 150 736
- US-A- 4 637 184

## Description

This invention relates to temperature regulation of various building elements of houses and is closer defined in the preamble of the following claim 1. Under the term house building elements fall i.a., but not exclusively, ground slabs (basement floors), story-separating suspended floor slabs (pavements), external and internal walls as well as roof (ceiling and external roof construction).

In a temperature regulation system according to the invention, sun energy and/or earth heat/cool are utilized for heating or cooling, respectively, one or more of the abovementioned house building elements. The relatively high temperature of the earth heat during the winter is, thus, suitably utilized for heating purposes in the winter time and its relatively low temperature in the summer for cooling purposes.

The house building elements according to the invention are to be formed with a view to facilitate industrial element making, they shall exhibit good static strength properties, allow great architectonic freedom of choice, as well as exhibiting great flexibility combined with an optimal resource utilization.

According to one aspect of the present invention, a complete sun energy/earth heat-utilizing house has been provided, comprising all or most of said building elements which are formed for partly accumulate energy, partly to function as a channel system for conveying hot/cold air to other building elements to be heated or cooled, respectively. According to another aspect some building elements formed in accordance with the present invention may be used in combination with more conventionally formed building components and/or elements in order to allocate the combination certain properties, e.g. heat in combination with slabs or floors.

Socalled air-based sun heat plants represents known technology which has been practiced with a good result from a pure heating technical point or view. Sun-energy houses distinguish themselves disadvantageously from an architectonic point of view, and the use of e.g. separate glass rooms for catching sun energy represents an obvious deficiency reducing the area to be occupied by the inhabitants. The socalled low-energy houses suffer from the same deficiencies and disadvantages.

Common to all known sun energy-utilizing house buildings is the use of advanced heat pumps which are complex in construction and function as well as expensive to procure. Existing heat pump constructions have also a very limited useful life. Heat storages in such energy houses often conist of water tanks, stone embarkments, salt layers and the like. Only very seldom the building elements themselves are used as heat storages.

Known materials, components and systems for the purpose concerned are i.a. transparent insulation materials, window constructions having an optimal k-value, combined heating and ventilating systems, advanced control systems, sun-cell-operated systems, new thermical heat storing materials and energy-efficient technical equipment.

Storage of heat in ground slabs is e.g. described in EP patent application No. 0 196 303, which discloses a system which gives a good insulation against the ground by means of a thick overlying concrete layer wherein helical-folded channels, socalled spiropipes, for the circulation of hot air are arranged. Here, the heat medium is hot air, and the concrete layer or ground slab constitutes the heat storage.

SE patent application No. 8903732-9 discloses suspended floor slabs comprising crossing corrugated plates with overlying concrete layer. The crossing cavities of the corrugated plates form a suitable channel system for circulation and transport of air or other gaseous heat-carrying medium, the overlying concrete layer acting as heat storage. Within the concrete or below the crossing corrugated plates extend channels in the form of said spiropipes the task of which is to convey newly heated air to the edges of the house before the air is conducted in between the crossing corrugated plates.

From NO laying-out publication No. 150 736 an element system is known, comprising two parallel plates with intermediate distancers, between which channels are formed for the guidance of air or other gas in one direction. One can achieve the same effect by deleting the distancers and use at least one corrugated plate. By using such elements or building elements as ground slab or suspended floor slab in a house, this known system aims at providing a rapid temperature regulation of the overlying room through an optimal direct heat transfer, i.e. without a previous storage of the heat.

Other known temperature regulation systems for house buildings comprise conventional heating through heating panels, heat cabels and water-based pipe systems in slabs, radiant heat from ceiling and/or pre-heated ventilation air.

As fas as building elements for houses generally are concerned, these are substantially constructed in a conventional way, i.e. mainly with their primary task in view. Building elements for roof and external walls are to be tight to wind and weather, exhibit the necessary strength properties with regard to pressure, tension and bending moment as well as having a nature satisfying the requirements to sound and heat insulation. The primary task for ground slabs (basement floor) comprises vapour density against ground, strength and stiffness as well as satisfactory insulating properties. For story-separating suspended floor slabs and internal walls, the primary function comprises room-separating properties, strength, rigidity, sound and heat insulating properties as well as fire-resistant nature. All these conventional building elements for houses may comprise constituents of wood, concrete, light weight concrete, metal (especially steel and aluminium), etc., as well as combinations thereof.

When socalled energy-houses generally are concerned (houses having solar cell panels, glass rooms, heat storages, heat pumps, heat transfer channel systems and temperature regulation, etc.), these are substantially more expensive than conventional houses having the same dimensions; this in spite of the fact that many of the building elements included in energy-houses are more or less conventional in their construction. The main reason for energy-houses generally being much more expensive than ordinary houses is the use of advanced technique comprising heat pumps, complex control systems, etc., as well as heat storing systems not constituting an integral part of the inhabitable area of the house building itself, i.a. socalled external glass rooms, sun-catching systems, etc.. Sun energy-houses must often be allocated a particular architecture, which by many is considered to be less attractive. Use of said advanced technique also involve a high risk for functional errors, operational disturbances and so forth, causing high maintenance and replacement costs.

None of the known sun energy-houses and associated systems have up to now reached a state wherein they may be considered fit for production in an industrial scale and commercialization.

Therefore, according to the present invention, one has aimed at eliminating or substantially reducing the abovementioned disadvantages, deficiencies and limitation of use in prior art technique at the field concerned. This object is according to the invention to be effected through the use of new house building elements which individually and particularly in suitable combinations, in addition to their general functions and without interferring detrimentally or vitiating on these functions, with or without noticeable price increase, are to exhibit properties promoting catching, transfer and storage of thermal energy. A temperature regulating system according to the present invention shall further comprise house building elements which, at least, have the same architectonic flexibility as quite ordinary components for the same purpose. It represents an obvious advantage with the invention, but not a binding presupposition for the successful practical execution thereof, that all house building elements (ground slabs (basement floor), story-separating suspended floor slabs (pavement), external and internal walls as well as ceiling/roof construction) exhibit the same general construction, which should prove the best criterion for a rational industrial production.

In accordance with the invention, said objects are realized through the features appearing from the following claims.

According to the invention, all building elements are to be incorporated as an integral part of the house construction and are presupposed to fulfil all their primary functions as well as additional functions. These additional functions will, of course, differ for external building elements (roof, external walls) on the one hand and internal building elements (inner walls, ground slab, suspended floor slab) on the other hand, in that normally only external wall/walls (dependent on the orientation in relation to north/south) and roof will be sun heat-catching.

Normally, house building elements according to the invention will, thus, be formed such that they all have a heat storing capacity as well as comprising a channel system for the circulation and transport of air or other heat-carrying gaseous fluid, in that the outer building elements such as external walls and roof in addition will exhibit a sun-catching function. For external walls and roof the design and choice of materials preferably should be such that a minimum use of ordinary insulating materials is required. Thereby, the house building elements formed in accordance with the invention may be dimensioned with a thickness substantially corresponding to conventional building elements of the same category.

In relation to a central core which may form the separating layer of the building element, it is suitable to form outer channel systems, which in relation to the environment will form one external and one internal channel system. The external channel system may advantageously be utilized to make use of earth heat from a pipe system placed below frost-proof depth. The internal channel system may constitute an active heat storage. Also the internal walls may be built according to this principle. Also for ground slabs one may use two separate channel systems, namely an upper (inner) channel system and a lower (outer) channel system. Thereby, one may i.a. avoid to install helical-folded channels, spiropipes, which distinguish many previous systems. Likewise, according to the invention, one achieves a very large contact surface for giving off heat/cold. In connection with sun energy-houses such a floor may advantageously be utilized as primary heat-accumulating body for sun energy.

In relation to previously described SE patent application No. 8903732-9, corresponding corrugated plates are located with the corrugations orientated in the same direction, whereby is achieved a substantial static capacity improvement, simultaneously as the formwork operations before concrete casting are simplified, as well as some reinforcement is saved. Likewise, in relation to prior art technique, one avoids to use a large number of laterally extending plates.

A sun energy house, possibly equipped with an earth heat-utilizing system, constructed from building elements according to the invention, will act as a large heat exchanger, wherein one may renounce advanced technical extra equipment such as heat pumps, external glass rooms, etc..

Examples of useful embodiments are further explained in the following, reference being made to the accompanying diagrammatical drawings, wherein:
figure 1 represents a principle sketch of a sun energy house having the possibility of earth heat-utilization, as seen in a cross-section parallel to the gable sides of the ridge roof house;
figures 2-6 show cross-sections through various building elements for the construction of the house according to figure 1 or a similar house, in that:

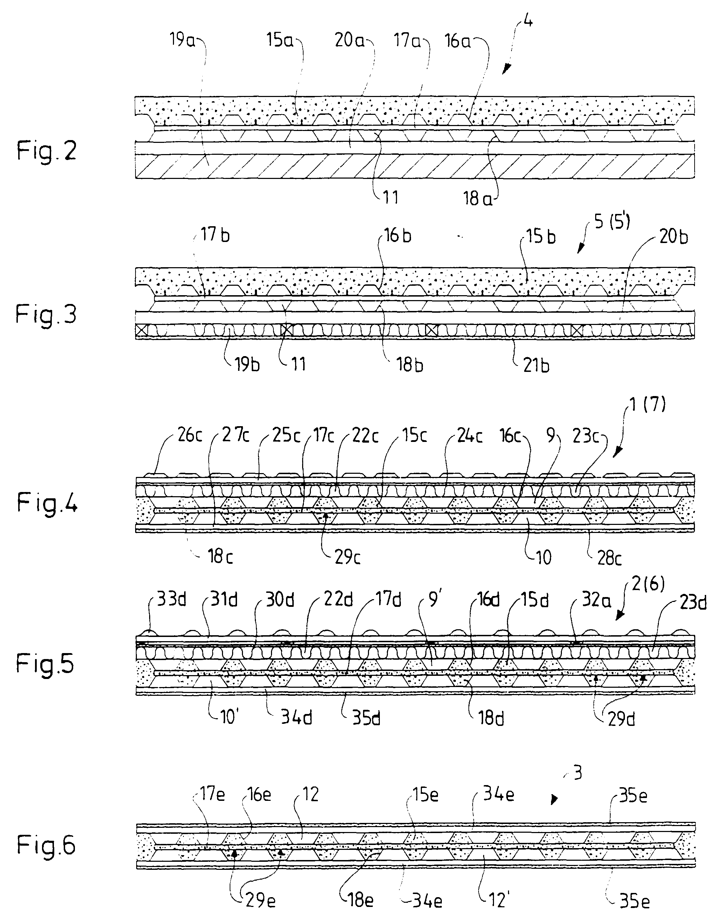

figure 2 shows a building element which in the house is intended for use as a ground slab (basement floor);
figure 3 shows a building element which in the house is intended for use as story-separating suspended floor slab;
figure 4 shows a building element which is intended for use as an external wall;
figure 5 shows a roof element;
figure 6 shows an internal wall.

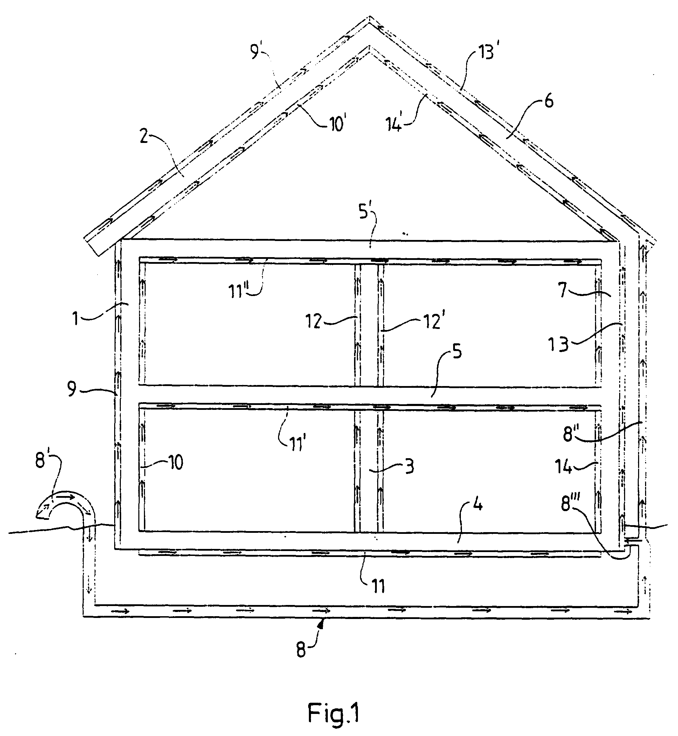

Reference is first made to figure 1 wherein the reference numeral 1 denotes an external wall at the sun side, 2 denoting external roof at the sun side, while 3 and 4 indicate a room-separating internal wall of the sub floor (or the basement) and a ground slab, respectively. Further, the reference numerals 5, 6 and 7 denote suspended floor slabs (the uppermost is defined at 5'), roof at the shadow side and external wall at the shadow side, respectively.

The separate building elements of figures 2-6 are given the same general reference numerals.

Further, in figure 1 the reference numeral 8 denotes a pipe system placed beneath frost-proof depth for the utilization of earth heat and having an air inlet 8' above ground level as well as an upwardly extending branch pipe 8" which will be properly heat insulated. Such a pipe system will usually be placed in a ditch located outside the foundation and may have a quite substantial extent. Air entering the air inlet 8' may have a temperature of several minus degrees, but may be heated by means of the earth heat to about 5°C before ascending into the branch pipe 8".

9 and 9' denote an external air layer included in external wall 1 and roof 2, respectively, at the sun side, and which is intended to act as sun-catcher. Likewise, an air channel 10 has been formed at the inner side of the house's sun side. The reference numerals 11, 11' and 11" denote air channels for ground slabs and suspended floor slabs respectively. 12, 12', 13, 13' and 14, 14' denote respectively air channels of internal wall, external air channels at the shadow side and internal air channels.

Reference is now made to figures 2-6, wherein the building elements shown have the following common components which all are through-going and extend parallel to the outer faces of the respective building element: a) a concrete layer (denoted 15a-15e, respectively), b) a corrugated plate (denoted 16a-16e, respectively) of steel, aluminium, plastic or the like, c) a spacer element (denoted 17a-17e, respectively) and d) a further corrugated plate (denoted 18a-18e, respectively) which may be identical with the firstmentioned corrugated plate as well as being orientated in the same direction as the latter (i.e. not crossing as in prior art technique).

The reference numerals of the air layers/air channel systems of figure 1 have been transferred to figures 2-6.

More specifically, figure 2 shows a building element which is intended for use as a ground slab 4, comprising the two mentioned corrugated plates 16a and 18a as well as the distance-maintaining element 17a. 19a denotes an insulation layer, usually expanded polystyrene, whilst 20a is a further distancer of plate element of any suitable material.

The suspended floor slab according to figure 3 has a construction corresponding to figure 2 and common parts are indicated by similar reference numerals 16b-20b, in that 21b defines a ceiling plate of desired nature and appearance.

Figure 4 shows a building element which is intended for use as external wall, comprising corrugated plates, spacer element and concrete layer corresponding to figures 2 and 3, and wherein the reference numerals correspond, in that 22c and 23c denote laths and insulation, whilst 24c indicates a wind sealing plate, e.g. a wood fibre plate. 25c and 26c indicate again laths and external clothing in the form of corrugated plates, wooden plates or the like. 27c, 28c, 29c denote respectively a lath, an internal building element, e.g. a plaster plate, and vertical reinforcement.

The building element (the roof element) according to figure 5 comprises the same corrugated plates and spacer element, 16d, 18d and 17d as in the preceding figures, in that 22d and 23d indicate laths and insulation as in figures 3 and 4. 30d denotes a sub roof, e.g. of plywood, whilst 31d and 32d indicate laths and 33d a roof coating, e.g. of corrugated steel or aluminium plates (preferably of the type which by appearance may resemble glazed roof tiles) or suitable types of roof coating onto which laths are intended to be nailed. 34d indicates an internal lath and 35d a building or ceiling plate of suitable type, e.g. a plaster plate, whilst 29d indicates vertical reinforcement.

Figure 6 shows a building element for houses and which is intended for use as internal wall, and which in principle is constructed in the same manner as the building elements according to the preceding figures, i.e. comprising two corrugated plates 16e and 18e having an intermediate spacer and seperating layer 17e of concrete. As in the embodiment of figure 5, the reference numerals 29e, 34e and 35e respectively denote reinforcement, laths and building plate, e.g. a plaster plate.

Again, reference is made to figure 1 wherein sun energy caught by the sun-radiated surfaces 9 and 9' of respectively external wall 1 and roof 2 at the sun side, in the form of heated air between the wind sealing plate 24 and external clothing 26c, respectively sub roof 30d and roof coating 33d is conducted within a separate pipe system by means of simple mechanical fans to a heat-accumulating body, a socalled heat storage, which primarily may consist of the concrete layer 15a in floor (figure 2) on ground and secondarily of the concrete layer 15b in tier of beams 5, 5' (figure 3). When one assumes that sufficient heat energy has been accumulated within said building elements 4 and 5, 5', the heat accumulation is continued within the respective concrete layer 15c-15e in external wall 1, 7 (figure 4), roof 2, 6 (figure 5) and internal walls 3 (figure 6).

On sunny days, the external wall or roof surface of the house at the sun side receive a so large amount of heat energy that the air immediately inwardly of the external wall and roof surface may be heated to about 80°C. The use of dark, e.g. black-coloured wall front and roofing materials 26c respectively 33d will favour the catching of the sun ray energy. This heated air is then conducted primarily to the building element 4 (the basement floor) and into the channel system thereof defined by the corrugated plate 18a and the insulation layer 19a, for then to be conducted further to the uppermost channel system defined by the corrugated plates 16a, 18a and the spacer elements 17a. Via the lower and upper air channel systems in ground slab and suspended floor slab and the internal channel system in external walls and roof, as well as channel systems at either side of the internal walls, the air becomes distributed over the entire house building. The concrete layer 15a-15e in the respective building elements may at any time function as heat-accumulating body.

When the sun-heated air has passed through the channel systems in the ground slab 4 and a portion of the heat energy of the air has been caught and accumulated within the concrete layer 15a of the ground slab or basement floor 4, figure 2, somewhat cooler air, e.g. through an insulated helical-folded channel, not shown, becomes conducted further to the suspended floor slab 5, 5', figure 3. Here, the air is conducted into the channel system between the corrugated plate 18b and the insulation layer 19b, for then to be conducted further between the corrugated plates 16b and 18b and the spacer elements 17b, in that some heat energy will be accumulated within the concrete layer 15b. The air is conducted further within registrering channel systems in adjacent building elements and provided that there still is heat energy to be extracted from the air after it has passed through the suspended floor slab 5, 5' (it is then a question of air having a temperature higher than about 25°C), this air is conducted further through an insulated pipe to e.g. the channel system 14' in roof 6 at the shadow side. Thereafter, if the air still contains heat energy capable of being stored, this air might be conducted into internal and/or external wall 3 and/or 7 via registering channel systems.

The earth heat-utilizing ground pipe system 8, 8', 8", wherein the rising pipe 8" leads upwards to the channel system 14' of the roof 6 at the shadow side, may have a short branch pipe 8''' leading to the channel system 13 of the external wall 7 at the shadow side. Such branch pipes 8''' are presupposed to be arranged at all sides of the house, and that rising pipes 8" lead to roof at two sides.

It is presupposed that the air of this ground pipe's underground portion will have a temperature of about 5°C summer as well as winter, so that air having passed through the ground pipe system in the summer, may be used for cooling purposes. Otherwise, this air which is heated in the winter (provided that the outdoor air has a lower temperature than 5°C), is conducted into the external channel system of the outer building elements, e.g. 6, 7, and there cause an insulating effect improving the heat energy economy of the house.

## Claims

1. A plate-like building element for use in a ground slab (4), a suspended floor slab (5, 5'), a wall (1, 3, 7) or a roof (2, 6) in any type of building, particularly in a low-energy house, comprising a first channel system (9-14) for the circulation of air or other gas as a heat-carrying medium, a second channel system (9-14) separated from the first channel system and a heat accumulating layer (15a-15e), preferably consisting of concrete, said channel systems each being formed by a corrugated plate (16a-16e, 18a-18e) and extending parallel to the main faces of the building element, such that when the building element is used in a ground slab (4), a suspended floor slab (5, 5') or a roof in a building an upper and a lower channel system result and when the building element is used in a wall (1, 3, 7) in a building an inner and an outer channel system result, **characterized in** that the corrugated plates (16a-16e, 18a-18e) are orientated with the corrugations in the same direction and that the corrugated plates are attached to intermediate spacer elements (17a-17e).

2. A building element as set forth in claim 1 for use in a ground slab (4) or a suspended floor slab (5, 5'), **characterized in** that the heat-accumulating layer (15a; 15b) forms one main face of the building part, so that the two channel systems are situated at the same side of the heat-accumulating layer (15a; 15b).

3. A building element as set forth in claim 1 for use in an internal wall (3), an external wall (1, 7) or a roof (2, 6), **characterized in** that the heat-accumulating layer (15c; 15d; 15e) is situated between the two channel systems.

4. A building, particularly a low-energy house, **characterized i n** that it is constructed from building elements according to one or more of the previous claims.

5. A building as set forth in claim 4, **characterized in** that one or more of the channel systems of said building elements are coupled to a pipe system (8-8''') which is partly buried in the ground beneath frost-proof depth.

## Patentansprüche

1. Ein plattenförmiges Bauelement zum Einsatz in einer Fundamentplatte (4) einer aufgehängten Geschoßdeckenplatte (5, 5'), einer Wand (1, 3, 7) oder einem Dach (2, 6) in einem Gebäude beliebiger Art, insbesondere in einem Niedrigenergiehaus, wobei das plattenförmige Bauelement aus einem ersten Kanalsystem (9-14) für die Zirkulation von Luft oder einem anderen Gas als Wärmeträger, einem zweiten Kanalsystem (9-14), das vom ersten Kanalsystem getrennt ist, und einer wärmespeichernde Schicht (15a-15e), vorzugsweise Beton, besteht, wobei die genannten Kanalsysteme jeweils aus einer gerippten Platte (16a-16e, 18a-18e) bestehen und parallel zu den Hauptflächen des Bauelements verlaufen, so daß sich, wenn das Bauelement in einer Fundamentplatte (4), einer aufgehängten Geschoßdeckenplatte (5, 5') oder einem Dach (2, 6) eines Gebäudes verwendet wird, ein oberes und ein unteres Kanalsystem ergeben und, wenn das Bauelement in einer Wand (1, 3, 7) verwendet wird, ein inneres und ein äußeres Kanalsystem, **gekennzeichnet dadurch**, daß die gerippten Platten (16a-16e, 18a-18e) mit den Rippen in derselben Richtung ausgerichtet sind und daß die gerippten Platten an dazwischenliegenden Abstandelementen (17a-17e) angebracht sind.

2. Bauelement nach Anspruch 1 zur Verwendung in einer Fundamentplatte (4) oder einer aufgehängten Geschoßdeckenplatte (5, 5'), **gekennzeichnet dadurch**, daß die wärmespeichernde Schicht (15a; 15b) eine Seite des Bauelements bildet, so daß die beiden Kanalsysteme auf derselben Seite der wärmespeichernden Schicht (15a; 15b) liegen.

3. Bauelement nach Anspruch 1 zur Verwendung in einer Innenwand (3), einer Außenwand (1, 7) oder einem Dach (2, 6), **gekennzeichnet dadurch**, daß die wärmespeichernde Schicht (15c; 15d; 15e) zwischen den beiden Kanalsystemen liegt.

4. Gebäude, insbesondere ein Niedrigenergiehaus, **gekennzeichnet dadurch**, daß es unter Verwendung von Bauelementen nach einem oder mehreren der vorstehenden Ansprüche gebaut wurde.

5. Gebäude nach Anspruch 4, **gekennzeichnet dadurch**, daß eines oder mehrere der Kanalsysteme der genannten Bauelemente zu einem Röhrensystem (8-8"') verbunden wurde, das zum Teil im Boden in frostfreier Tiefe verläuft.

## Revendications

1. Un élément de construction en forme de plaque destiné à être utilisé dans une dalle de fond (4), une dalle de plancher en suspension (5, 5'), un mur (1, 3, 7) ou une toiture (2, 6), dans n'importe quel type de construction, en particulier dans une maison à consommation réduite d'énergie, comprenant un premier réseau de conduits (9-14) permettant la circulation d'air ou de tout autre gaz servant de fluide caloporteur, un second réseau de conduits (9-14) séparé du premier réseau de conduits et une couche accumulatrice de chaleur (15a-15e), de préférence en béton, chaque réseau de conduits étant constitué d'une tôle ondulée (16a-16e, 18a-18e) et s'étendant parallèlement aux faces principales de l'élément de construction, en sorte que, lorsque l'élément de construction est utilisé dans une dalle de fond (4), une dalle de plancher en suspension (5, 5') ou une toiture d'une construction, il résulte un système de conduits supérieur et un système de conduits inférieur, et que, lorsque l'élément de construction est utilisé dans un mur (1, 3, 7) d'une construction, il résulte un système de conduits intérieur et un système de conduits extérieur, **caractérisé en ce que** les ondulations des tôles ondulées (16a-16e, 18a-18e) sont colinéaires et en ce que les tôles ondulées sont fixées à des éléments d'espacement (17a-18e).

2. Un élément de construction selon la revendication 1 destiné à être utilisé dans une dalle de fond (4) ou une dalle de plancher en suspension (5, 5'), **caractérisé en ce que** la couche accumulatrice de chaleur (15a; 15b) forme une des faces principales de la partie de construction, de sorte que les deux réseaux de conduits soient situés du même côté de la couche accumulatrice de chaleur (15a; 15b).

3. Un élément de construction selon la revendication 1 destiné à être utilisé dans un mur intérieur (3), un mur extérieur (1, 7) ou une toiture (2, 6) **caractérisé en ce que** la couche accumulatrice de chaleur (15c; 15d; 15e) est située entre les deux réseaux de conduits.

4. Une construction, en particulier une maison à consommation réduite d'énergie, **caractérisé en ce qu**'elle est constituée d'éléments de construction selon une ou plusieurs des revendications précédentes.

5. Une construction selon la revendication 4, **caractérisé en ce que** un ou plusieurs des réseaux de conduits desdits éléments de construction sont couplés à un réseau de conduits (8-8"') lequel est en partie enterré dans le sol à profondeur inatteignable par le gel.
